# FASCICULE DE BREVET EUROPEEN

(11) **EP 4 165 449 B1**
(45) Date de publication et mention de la délivrance du brevet: **06.08.2025**
(21) Numéro de dépôt: 21732013.4
(22) Date de dépôt: 10.06.2021
(51) Int. Cl.: G02B 5/08, G02B 7/18, G02B 26/06, G02B 26/08, G02B 27/00

(54) **OPTIQUE RÉFLECTIVE ÉQUIPÉE D'UN SYSTÈME DE REFROIDISSEMENT**
REFLEKTIERENDE OPTIK MIT EINEM KÜHLSYSTEM
REFLECTIVE OPTICS EQUIPPED WITH A COOLING SYSTEM

(30) Priorité: 15.06.2020 FR 2006212
(43) Date de publication de la demande: 19.04.2023
(73) Titulaire: ISP System, 65501 Vic-en-Bigorre Cedex (FR)
(72) Inventeur: SAUVAGEOT, Paul, 65501 Vic en Bigorre (FR); ROPERT, Laurent, 65501 Vic en Bigorre (FR); THEIS, Sebastien, 65501 Vic en Bigorre (FR); FOURCADE, Thibaut, 65501 Vic en Bigorre (FR)
(74) Mandataire: Cabinet Célanie
(86) Numéro de dépôt international: PCT/EP2021/065659
(87) Numéro de publication internationale: WO 2021/254879

(56) Documents cités:
- US-A1- 2001 008 469
- US-A1- 2010 020 423
- US-B1- 10 359 603

## Description

### DOMAINE DE L'INVENTION

Le secteur technique de la présente invention est celui des optiques réflectives utilisées dans des systèmes de faisceaux lumineux, notamment du type laser, ainsi que leur moyen de refroidissement.

Comme cela est bien connu, il est nécessaire d'utiliser des structures optiques réflectives pour transporter les faisceaux laser, transformer leur profil, les focaliser ou modifier ou corriger le front d'ondes dudit faisceau.

Il existe de nombreux types de lasers différents, tant en termes de puissance, que de mode d'émission ou de type de milieu amplificateur utilisé.

Quand le laser est un laser de forte puissance moyenne, les optiques réflectives utilisées subissent une forte accumulation d'énergie qui se traduit par un échauffement. Cela est problématique car un tel échauffement entraîne la déformation des optiques, ce qui provoque des aberrations optiques sur le faisceau laser, ainsi que la dégradation de ces mêmes optiques. Il est alors nécessaire de les remplacer à une fréquence qui entraîne un coût difficilement supportable pour l'utilisateur.

Les optiques réflectives doivent donc être refroidies à partir du moment où le refroidissement naturel par convexion avec l'air ambiant ne suffit plus, ce qui est le cas quand elles sont utilisées dans des lasers de puissance moyenne importante (typiquement 5 à 20 kW). Cela est d'autant plus critique quand le laser en question se trouve dans le vide, comme par exemple ceux utilisés dans les laboratoires scientifiques tel que les lasers PetaWatt à taux de répétition élevé, délivrant une puissance moyenne de 10kW ou plus, ou les lasers en mode continu ou pseudo-continus utilisés par exemple dans l'industrie micro-électronique avec des puissances moyenne de 1 à 30 kW. Il existe également des applications en astronomie, en particulier dans le domaine des infra-rouges, et en observation spatiale pour des télescopes de grande ouverture dont les qualités optiques peuvent être dégradées par les apports thermiques dus à la scène observée (terre, astre lumineux,).

### ETAT DE LA TECHNIQUE

Plusieurs systèmes de refroidissement sont connus et utilisés pour refroidir les optiques réflectives utilisées dans les lasers.

Par exemple, l'article « CVD SiC deformable mirror with monolithic cooling channels » de Kyohoon Ahn et al., publié dans Optics Express Vol. 26, N° 8, en 2018, décrit un système de refroidissement pour miroir composé de canaux dans lesquels circule de l'eau, les canaux étant formés dans l'épaisseur du miroir lui-même et le miroir étant actionné par des actionneurs piézo-électriques. Ce système impose donc une intervention sur le miroir lui-même, ce qui est toujours délicat à réaliser.

Le brevet US-4657358 décrit un miroir déformable refroidi par des canaux perpendiculaires au miroir, chaque canal étant inclus dans la tige de chaque actionneur et formant une petite chambre circulaire autour de la tête de chaque actionneur. Il s'agit donc d'un système constitué par des points de refroidissement localisés limitant les performances de refroidissement.

Le brevet US-4844603 décrit un miroir flexible refroidi présentant une chambre de refroidissement entre ledit miroir et son support, la chambre de refroidissement étant emplie par le liquide de refroidissement.

L'article « A cooled deformable bimorph mirror for a high power laser » par Jun Ho Lee, publié dans Journal of the optical society of Korea, juin 2006, décrit un système de refroidissement par convection et conduction, la convection étant assurée par un gaufrage oblique inclus sous la surface de réflexion et dans lequel circule de l'eau en tant que liquide de refroidissement, la conduction étant assurée par une couche de revêtement métallique incluse dans le gaufrage.

L'article « Deformable mirror for high power laser applications » de Libor Mrña et al., publié dans Proceedings of SPIE, the international Society of optical Engineering, janvier 2015, décrit un miroir déformable par des actionneurs, refroidi par un liquide de refroidissement sous pression circulant le long de la surface arrière du miroir à travers la structure hexagonale de ladite surface.

L'article « Cooled and uncooled single-channel deformable mirrors for industrial laser systems » de B. S. Vinevich et al., publié dans Quantum Electronics, 1998, décrit un système de gaufrage en biais inclus dans le miroir dans lequel circule un liquide de refroidissement.

L'article « Development of a unimorph deformable mirror with water cooling » de Zhengxiong Zhu et al., publié dans Optics express, novembre 2017 décrit un système de refroidissement où le liquide de refroidissement circule à travers la face arrière du miroir dans une cavité de refroidissement. Une unité de refroidissement à la périphérie du miroir maintient le liquide de refroidissement à une température constante de 20°C.

Le brevet US 2001/008469 A1 décrit un miroir déformable sous l'action d'un organe de déformation.

Ces différents systèmes présentent cependant des manques ou des inconvénients.

En effet, les systèmes permettant de refroidir les miroirs par de l'air ou un liquide de refroidissement sur la face arrière du miroir en périphérie ne produisent pas un refroidissement assez efficace pour être utiles dans le cas de lasers de forte puissance moyenne. Ces systèmes de refroidissement créent un gradient de température au niveau de la surface active du miroir ce qui est préjudiciable à sa qualité optique.

Quant aux systèmes de refroidissement par un liquide circulant sur la face arrière du miroir, s'ils présentent une excellente efficacité thermique, les pulsations du pompage du liquide de refroidissement provoquent l'apparition de défauts optiques dynamiques dans le faisceau laser.

Enfin les systèmes de refroidissement par circulation d'un liquide de refroidissement dans un ensemble de canaux situés soit dans l'épaisseur du miroir, soit contre la face arrière du miroir, entraînent une baisse des qualités optiques du miroir à cause des aberrations optiques apparaissant sur le faisceau laser à cause de l'empreinte thermique des canaux de refroidissement. Il s'agit en outre de systèmes dont la fabrication est complexe et onéreuse.

### EXPOSE DE L'INVENTION

La présente invention propose un système de refroidissement des optiques réflectives utilisées dans les dispositifs d'observation, les télescopes, les lasers de forte puissance moyenne et pour les dispositifs optiques sensibles aux effets thermiques, sans pour autant souffrir des désavantages et limitations présents dans l'art antérieur.

L'invention concerne une optique réflective selon la revendication 1.

Les revendications dépendantes définissent des modes de réalisation avantageux.

Pour une puissance moyenne inférieure, il peut être approprié de remplacer le bloc comportant le canal avec le fluide caloporteur par une masse froide refroidie par convection naturelle ou forcée aux moyens d'ailettes pratiquées au dos de la plaque froide par exemple et/ou par conduction grâce au raccordement thermique de la masse froide à l'enceinte à vide par exemple dans le cas d'installation sous vide.

Un premier avantage du système de refroidissement selon l'invention est qu'il est adaptable aux miroirs fixes et aux miroirs déformables. Il suffit de prévoir des perçages à travers le dissipateur pour le passage des actionneurs venant en contact avec ces miroirs déformables.

Un autre avantage de l'invention réside dans le fait que le système de refroidissement peut s'adapter à toutes les formes de miroir : plan, parabolique, rectangulaire, circulaire, etc...

Un autre avantage encore de l'invention réside dans le fait que le système de refroidissement peut s'adapter à une gamme étendue de puissance de faisceaux laser dont la section peut varier entre quelques centimètres carrés et plus de 2500cm².

Un autre avantage encore de l'invention est que le circuit de refroidissement n'est pas en contact avec le miroir lui-même. Ainsi, les fluctuations de pression de ce circuit n'affectent pas la géométrie du miroir et donc n'ont pas de conséquences sur sa fonction optique.

Un autre avantage encore de l'invention réside dans la faible résistance thermique entre la face réfléchissante du miroir et le dissipateur, ce qui permet un refroidissement très efficace.

Un autre avantage encore de l'invention est que le miroir peut être fabriqué dans une matière avec de bonnes aptitudes optiques (verre et dérivés du verre ou silicium) ayant des propriétés de conduction thermique moyennes.

Un autre avantage encore de l'invention réside dans la correction des déformations statiques du miroir sous l'effet de la gravité grâce à l'ajustement de la pression du fluide thermo-conducteur dans la chambre de refroidissement et au vase d'expansion.

Un autre avantage encore de l'invention réside dans le fait que le système de refroidissement permet aux échanges thermiques d'avoir lieu sur la quasi-totalité de la surface du miroir.

Un autre avantage encore de l'invention réside dans le fait que le système de refroidissement est à deux étages, le premier étage étant constitué par le fluide thermo-conducteur présent dans la chambre de refroidissement et le deuxième étage étant constitué par le fluide caloporteur circulant dans le canal de refroidissement présent dans le dissipateur, la combinaison des deux étages produisant un effet de refroidissement efficace et uniforme.

Un autre avantage encore de l'invention est que le dissipateur étant réalisé dans un matériau thermiquement conducteur, sa température est homogène et ne présente pas de variations thermiques susceptibles de perturber le fonctionnement de l'optique réflective.

### BREVE DESCRIPTION DES DESSINS

D'autres caractéristiques, avantages et détails de l'invention seront mieux compris à la lecture du complément de description qui va suivre en rapport avec les dessins dans lesquels :
[Fig 1] représente une optique réflective rigide dotée du système de refroidissement de l'invention ;
[Fig 2] représente une optique réflective déformable dotée du système de refroidissement de l'invention ;
[Fig 3] représente une coupe transversale du dissipateur de la figure 2 selon l'axe X-X', et
[Fig 4] représente une disposition particulière des supports fixes.

### DESCRIPTION DETAILLEE DE MODES DE REALISATION DE L'INVENTION

L'invention va maintenant être décrite avec plus de détail. Comme indiqué précédemment, il s'agit de refroidir une optique réflective afin d'éviter ses déformations sous l'effet de la chaleur pour minimiser les aberrations optiques.

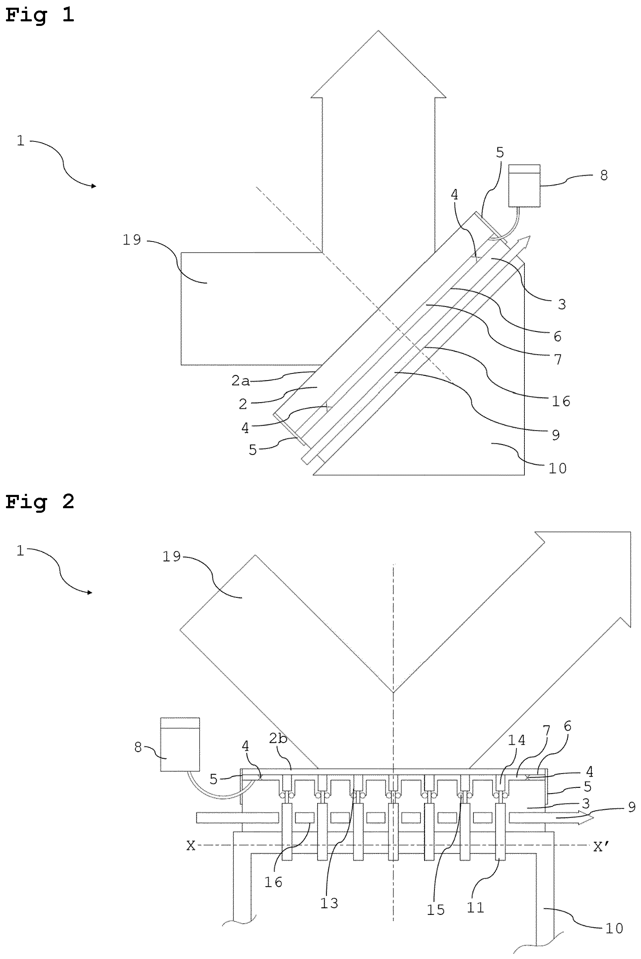

Sur la figure 1, on a représenté en coupe une optique réflective 1, incorporant un miroir 2 qui dans cette version est un miroir plan 2a qui réfléchit un faisceau incident 19, par exemple du type laser, vers un autre chemin optique.

Le miroir 2 est fixé sur un dissipateur 3 par l'intermédiaire de supports 4. Les supports 4 définissent, en coopération avec une ou plusieurs pièces d'étanchéité 5, une chambre intermédiaire 6, située entre le miroir 2 et le dissipateur 3. Selon l'invention, les supports 4 sont des supports astatiques qui empêchent ainsi la transmission des fluctuations de pression ou des mouvements entre le dissipateur 3 et le miroir 2 ainsi qu'entre la chambre intermédiaire 6 et le miroir 2.

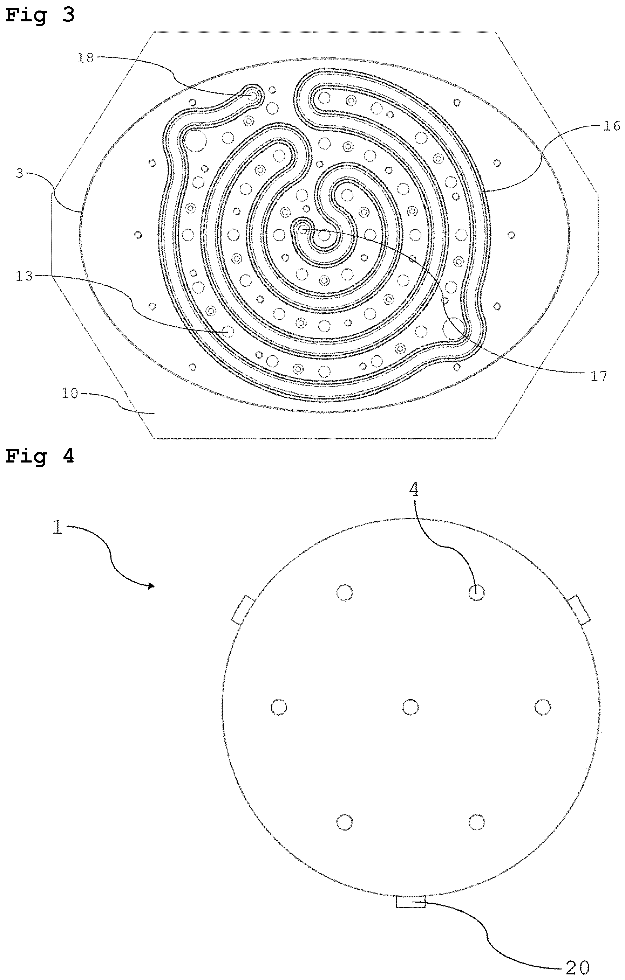

Ainsi, dans une configuration de dix supports, on peut prévoir par exemple sept supports astatiques 4 et trois supports fixes 20 comme représenté sur la figure 4. Cette chambre 6 est remplie d'un fluide thermo-conducteur 7. La chambre intermédiaire 6 communique avec un vase d'expansion 8 qui permet l'ajustement de la pression du fluide thermo-conducteur 7 dans ladite chambre.

Le dissipateur 3 est un bloc de support sur lequel repose le miroir 2. Il présente une structure interne perforée d'un canal de refroidissement 16 dans lequel circule un fluide caloporteur 9.

Sur la figure 1, on voit que le dissipateur 3 présente une surface de contact égale à celle du miroir. Il va de soi que ce dissipateur peut présenter une surface différente, soit supérieure, soit inférieure.

Pour une puissance moyenne inférieure, il peut être approprié de remplacer le bloc comportant le canal 16 avec le fluide caloporteur 9 par une masse froide refroidie par convention naturelle ou forcée aux moyens d'ailettes pratiquées au dos de la plaque froide par exemple et/ou par conduction grâce au raccordement thermique de la masse froide à l'enceinte à vide par exemple dans le cas d'installation sous vide. Il est avantageux que ladite masse froide présente une bonne conductivité thermique et une bonne chaleur spécifique. Par bonne conductivité thermique ou bonne chaleur spécifique, on entend des valeurs comme celles procurées par le cuivre.

La masse froide refroidie se présente sous la forme d'une masse métallique, constituée de cuivre par exemple.

L'optique réflective 1 et le dissipateur 3 reposent sur un support 10 intégré dans l'ensemble laser non représenté.

La figure 2 représente une optique réflective 1 constituée par un miroir déformable 2b associé au système de refroidissement selon l'invention.

Les actionneurs 11 sont supportés par le support 10. Ces actionneurs traversent le dissipateur 3 et la chambre intermédiaire 6 pour venir en contact avec la face arrière du miroir 2b par l'intermédiaire d'une tête mobile 14. La structure d'un actionneur est bien connue et il n'est pas nécessaire de la décrire plus complètement.

Le dissipateur 3 est muni de percements 13 permettant le passage des actionneurs 11 avec un certain jeu. Chaque percement 13 est fermé à l'aide d'une bague d'étanchéité 15 pour assurer le maintien du fluide thermo-conducteur 7 dans la chambre intermédiaire 6.

De façon identique au cas d'une optique réflective fixe, la figure 2 représente un miroir 2 derrière lequel s'ouvre une chambre intermédiaire 6 remplie d'un liquide thermo-conducteur 7. Le miroir 2 repose sur le dissipateur 3 par l'intermédiaire de supports 4.

Une ou plusieurs pièces d'étanchéité 5 bordent la chambre intermédiaire 6. Comme précédemment, le dissipateur 3 comporte un canal de circulation d'un fluide caloporteur 9.

On comprend que l'ensemble décrit en relation avec les figures 1 et 2 permet de répartir la chaleur sur l'ensemble de la face arrière du miroir 2a ou 2b à l'aide de la chambre intermédiaire 6 en évitant tout gradient de température. Lorsque la température augmente, la chaleur transmise par le miroir 2a ou 2b provoque la circulation du liquide 7 dans la chambre 6 et le vase d'expansion 8. D'autre part, la chambre 6 permet de réduire les déformations du miroir 2a ou 2b en raison de l'inertie hydraulique du liquide 7.

L'ensemble chambre intermédiaire 6 et vase d'expansion 8 permet de compenser et de contrôler les déformations du miroir 2. En modifiant l'altitude du vase d'expansion 8 par rapport à la chambre intermédiaire 6, on fait varier la résistance de la chambre intermédiaire 6 contre les déformations du miroir 2. La chaleur reçue par le miroir 2a ou 2b est répartie de manière uniforme par l'absence de points chauds.

Ainsi, l'évacuation de chaleur reçue par le miroir 2a ou 2b est assurée à l'aide du dissipateur 3 dans lequel circule le fluide caloporteur 9.

Lorsque le faisceau laser 19 est un faisceau de forte puissance moyenne, le miroir 2 reçoit une forte charge énergétique qui augmente sa température. Cette charge thermique est communiquée au fluide thermo-conducteur 7 puis au dissipateur 3 aux fins d'une diffusion et d'une répartition uniforme du flux thermique permettant le refroidissement selon une première étape.

Cette première étape de diffusion est suivie d'une deuxième étape où le dissipateur 3 est refroidi à son tour par le fluide caloporteur 9 qui circule dans le canal 16 formé dans le dissipateur 3.

Il s'agit donc d'un système de refroidissement en deux phases. Ce système permet un refroidissement efficace et uniforme de l'optique réflective dans laquelle il est intégré.

La figure 3 représente une coupe transversale du dissipateur 3 selon l'axe X-X' pratiquée dans son épaisseur au niveau du canal 16. On voit que le canal 16 décrit un chemin délimitant un certain nombre de boucles proches les unes des autres. Ainsi, le miroir 2a ou 2b peut être refroidi de manière uniforme sur toute sa surface.

Le canal 16 parcourt la quasi-totalité de la surface du dissipateur 3 dont le point d'entrée 17 du fluide est de manière astucieuse situé dans sa zone centrale et le point de sortie 18 du fluide situé au niveau de sa périphérie. Il va de soi que cette configuration est préférée, mais toute autre configuration peut être adoptée en fonction de la forme et des dimensions du miroir et de l'énergie qu'il reçoit.

Les percements 13 de passage des actionneurs sont répartis sur toute la surface du dissipateur entre les différentes boucles.

Le miroir 2 peut être poli. Il peut également être revêtu ou non d'un traitement permettant de réfléchir le faisceau laser. Le traitement réfléchissant peut être un revêtement appliqué sur l'optique de type métallique ou diélectrique ou une combinaison des deux, permettant d'atteindre une réflectivité de 99% voire plus.

Le miroir est alternativement réalisé dans un matériau thermiquement conducteur par exemple un métal aisé à polir tel le cuivre ou le silicium. Il est aussi possible d'utiliser un substrat base silice afin d'obtenir des qualités optiques optimales, mais la capacité de refroidissement sera moindre.

Le fluide thermo-conducteur 7 peut être par exemple du Galinstan et le fluide caloporteur 9 peut être de l'eau.

## Revendications

1. Optique réflective (1) de transport, de transformation ou de correction d'un faisceau lumineux (19) notamment du type laser, **caractérisée en ce qu'**elle comprend un miroir (2) recevant le faisceau lumineux (19), un circuit primaire de refroidissement constitué par une chambre intermédiaire (6) de fluide thermo-conducteur (7) disposée contre le miroir (2) à l'arrière de celui-ci, et un circuit secondaire de refroidissement constitué par un dissipateur thermique (3) disposé contre la chambre intermédiaire (6) de fluide thermo-conducteur (7), ledit dissipateur (3) se présentant soit sous la forme d'une masse métallique refroidie par convection ou conduction, soit sous la forme d'une plaque réalisée en un matériau doté d'une conductivité thermique d'une valeur telle que celle procurée par le cuivre, le dissipateur (3) présentant une surface de contact égale ou différente à celle de la dite optique réflective, le miroir (2) étant fixé sur le dissipateur (3) à l'aide de supports astatiques.

2. Optique réflective (1) selon la revendication 1, **caractérisé en ce que** lorsque le dissipateur (3) est sous la forme d'une plaque, ladite plaque comporte dans son épaisseur un canal (16) dans lequel on fait circuler un fluide caloporteur (9).

3. Optique réflective (1) selon la revendication 1 ou 2, **caractérisée en ce que** ledit miroir (2) est un miroir déformable équipé d'actionneurs (11) sur sa face arrière, chaque actionneur (11) traversant la chambre intermédiaire (6) de fluide thermo-conducteur (7) et le dissipateur (3) par un percement (13).

4. Optique réflective (1) selon la revendication 3, **caractérisée en ce que** chaque actionneur (11) est muni d'une tête mobile (15) en translation dans un percement (13) pratiqué dans le dissipateur (3), le fluide thermo-conducteur (7) circulant dans ledit percement (13) autour de la tête mobile (14).

5. Optique réflective (1) selon la revendication 4, **caractérisée en ce que** le percement (13) est fermé par une bague d'étanchéité (15).

6. Optique réflective (1) selon l'une quelconque des revendications 2 à 5, **caractérisée en ce que** le canal (16) intégré dans le dissipateur thermique (3) se présente sous la forme d'un chemin délimitant des boucles proches les unes des autres, ledit canal (16) parcourant la surface du dissipateur et présentant un point d'entrée (17) et un point de sortie (18).

7. Optique réflective (1) selon la revendication 6, **caractérisée en ce que** le point d'entrée (17) du fluide caloporteur (9) dans le canal est situé au voisinage du centre du dissipateur (3).

8. Optique réflective (1) selon la revendication 6 ou 7, **caractérisée en ce que** le point de sortie (18) du fluide caloporteur (9) hors du canal est situé au voisinage de la périphérie du dissipateur (3).

9. Optique réflective (1) selon l'une des revendications précédentes, **caractérisée en ce que** le miroir (2), la chambre intermédiaire (6) de fluide thermo-conducteur (7) et le dissipateur thermique (3) sont associés mécaniquement pour former un bloc solidaire.

10. Optique réflective (1) selon l'une quelconque des revendications précédentes, **caractérisée en ce que** le matériau thermiquement conducteur constituant le dissipateur (3) est du métal, préférentiellement du cuivre.

11. Optique réflective (1) selon l'une quelconque des revendications précédentes, **caractérisée en ce que** la chambre intermédiaire (6) de fluide thermo-conducteur (7) est en relation avec un vase d'expansion (8).

## Patentansprüche

1. Reflektierende Optik (1) zum Transportieren, Umwandeln oder Korrigieren eines Lichtstrahls (19), insbesondere des Lasertyps, **dadurch gekennzeichnet, dass** sie einen Spiegel (2), der den Lichtstrahl (19) aufnimmt, einen primären Kühlkreislauf, der aus einer Zwischenkammer (6) mit wärmeleitendem Fluid (7) besteht, die gegen den Spiegel (2) an dessen Rückseite angeordnet ist, und einen sekundären Kühlkreislauf umfasst, der aus einem Kühlkörper (3) besteht, der gegen die Zwischenkammer (6) mit wärmeleitendem Fluid (7) angeordnet ist, wobei der Kühlkörper (3) entweder in Form einer durch Konvektion oder Konduktion gekühlten Metallmasse oder in Form einer Platte aus einem Material mit einer Wärmeleitfähigkeit von einem Wert, wie er durch Kupfer bereitgestellt wird, vorliegt, wobei der Kühlkörper (3) eine gleiche oder andere Kontaktfläche aufweist als die der reflektierenden Optik, wobei der Spiegel (2) mit Hilfe von astatischen Halterungen am Kühlkörper (3) befestigt ist.

2. Reflektierende Optik (1) nach Anspruch 1, **dadurch gekennzeichnet, dass**, wenn der Kühlkörper (3) in Form einer Platte vorliegt, die Platte in ihrer Dicke einen Kanal (16) enthält, in dem ein Wärmeträgerfluid (9) zirkuliert.

3. Reflektierende Optik (1) nach Anspruch 1 oder 2, **dadurch gekennzeichnet, dass** der Spiegel (2) ein verformbarer Spiegel ist, der auf seiner Rückseite mit Stellgliedern (11) ausgestattet ist, wobei jedes Stellglied (11) die Zwischenkammer (6) mit wärmeleitendem Fluid (7) und den Kühlkörper (3) durch eine Bohrung (13) durchdringt.

4. Reflektierende Optik (1) nach Anspruch 3, **dadurch gekennzeichnet, dass** jedes Stellglied (11) mit einem beweglichen Kopf (15) versehen ist, der in einer in dem Kühlkörper (3) ausgebildeten Bohrung (13) verschiebbar ist, wobei das wärmeleitende Fluid (7) in der Bohrung (13) um den beweglichen Kopf (14) zirkuliert.

5. Reflektierende Optik (1) nach Anspruch 4, **dadurch gekennzeichnet, dass** die Bohrung (13) durch einen Dichtungsring (15) verschlossen ist.

6. Reflektierende Optik (1) nach einem der Ansprüche 2 bis 5, **dadurch gekennzeichnet, dass** der in den Kühlkörper (3) integrierte Kanal (16) in Form eines Pfades vorliegt, der nahe beieinander liegende Schleifen begrenzt, wobei der Kanal (16) die Oberfläche des Kühlkörpers durchläuft und einen Eintrittspunkt (17) und einen Austrittspunkt (18) aufweist.

7. Reflektierende Optik (1) nach Anspruch 6, **dadurch gekennzeichnet, dass** der Eintrittspunkt (17) des Wärmeträgerfluids (9) in den Kanal in der Nähe der Mitte des Kühlkörpers (3) liegt.

8. Reflektierende Optik (1) nach Anspruch 6 oder 7, **dadurch gekennzeichnet, dass** der Austrittspunkt (18) des Wärmeträgerfluids (9) aus dem Kanal in der Nähe des Umfangs des Kühlkörpers (3) liegt.

9. Reflektierende Optik (1) nach einem der vorhergehenden Ansprüche, **dadurch gekennzeichnet, dass** der Spiegel (2), die Zwischenkammer (6) mit wärmeleitendem Fluid (7) und der Kühlkörper (3) mechanisch verbunden sind, um einen festen Block zu bilden.

10. Reflektierende Optik (1) nach einem der vorhergehenden Ansprüche, **dadurch gekennzeichnet, dass** das wärmeleitende Material, das den Kühlkörper (3) bildet, aus Metall, vorzugsweise Kupfer, besteht.

11. Reflektierende Optik (1) nach einem der vorhergehenden Ansprüche, **dadurch gekennzeichnet, dass** die Zwischenkammer (6) mit wärmeleitendem Fluid (7) mit einem Ausdehnungsgefäß (8) in Verbindung steht.

## Claims

1. A reflective optics (1) for transporting, transforming or correcting a light beam (19) in particular of the laser type, **characterised in that** it comprises a mirror (2) receiving the light beam (19), a primary cooling circuit consisting of an intermediate chamber (6) of thermally conductive fluid (7) disposed against the mirror (2) at the rear thereof, and a secondary cooling circuit consisting of a heat sink (3) disposed against the intermediate chamber (6) of thermally conductive fluid (7), said sink (3) having either the form of a metal mass cooled by convection or conduction, or the form of a plate made of a material having a thermal conductivity with a value such as that provided by copper, the sink (3) having a contact surface area equal to or different from that of said reflective optics, the mirror (2) being attached to the sink (3) using astatic supports.

2. The reflective optics (1) according to claim 1, **characterised in that** when the sink (3) is in the form of a plate, said plate includes in its thickness a channel (16) in which a heat transfer fluid (9) is circulated.

3. The reflective optics (1) according to claim 1 or 2, **characterised in that** said mirror (2) is a deformable mirror equipped with actuators (11) on its rear face, each actuator (11) passing through the intermediate chamber (6) of thermally conductive fluid (7) and the sink (3) via an aperture (13).

4. The reflective optics (1) according to claim 3, **characterised in that** each actuator (11) is provided with a head (15) translationally movable in an aperture (13) provided in the sink (3), the thermally conductive fluid (7) circulating in said aperture (13) around the movable head (14).

5. The reflective optics (1) according to claim 4, **characterised in that** the aperture (13) is closed by a sealing ring (15).

6. The reflective optics (1) according to any of claims 2 to 5, **characterised in that** the channel (16) integrated into the heat sink (3) is in the form of a path delimiting loops close to each other, said channel (16) running along the surface of the sink and having an entry point (17) and an exit point (18).

7. The reflective optics (1) according to claim 6, **characterised in that** the entry point (17) of the heat transfer fluid (9) into the channel is located in the vicinity of the centre of the sink (3).

8. The reflective optics (1) according to claim 6 or 7, **characterised in that** the exit point (18) of the heat transfer fluid (9) out of the channel is located in the vicinity of the periphery of the sink (3).

9. The reflective optics (1) according to one of the preceding claims, **characterised in that** the mirror (2), the intermediate chamber (6) of thermally conductive fluid (7) and the heat sink (3) are mechanically associated to form an integral block.

10. The reflective optics (1) according to any of the preceding claims, **characterised in that** the thermally conductive material constituting the sink (3) is metal, preferably copper.

11. The reflective optics (1) according to any of the preceding claims, **characterised in that** the intermediate chamber (6) of thermally conductive fluid (7) is in connection with an expansion tank (8).
